# EUROPEAN PATENT APPLICATION

(11) **EP 3 614 240 A1**
(43) Date of publication of application: **26.02.2020**
(21) Application number: 19179841.2
(22) Date of filing: 13.06.2019
(51) Int. Cl.: G06F 3/0354, G06F 3/038, G06F 3/044

(54) **CAPACITIVE STYLUS, TOUCH DEVICE, AND ELECTRONIC SYSTEM THEREOF**

(30) Priority: 22.08.2018 TW 107211485 U
(71) Applicant: Acer Incorporated, New Taipei City 221 (TW)
(72) Inventor: Ko, Chueh-Pin, 221 New Taipei City (TW)
(74) Representative: Straus, Alexander

(57) **Abstract**

A capacitive stylus (100) includes a non-conductive nib (110), a first electrode (130), a second electrode (140) and a control circuit (150). The first electrode (130) and the second electrode (140) are at different longitudinal positions of the capacitive stylus (100), and the control circuit (150) is configured to control the first electrode (130) to generate a first signal and control the second electrode (140) to generate a second signal, wherein the first signal and the second signal are used in a touch device (610) for determining a position of the nib (110).

## Description

### Field of the Invention

The present invention relates to a capacitive stylus, a touch device, and an electronic system according to the pre-characterizing clauses of claims 1, 15 and 18.

### Background of the Invention

Related art capacitive styluses use the nib to preload a voltage, so that when the nib touches the touch device, the inner circuit of the touch device may detect the capacity variation between the nib and the touch device, so as to determine the location of the nib on the touch device. Since the capacitive stylus requires exerting voltage on the nib, the nib should be manufactured with conductive material, causing inconvenience of manufacturing and function limitations.

### Summary of the Invention

This in mind, the application aims at providing a capacitive stylus, a touch device and associated electronic system in order to solve the problems mentioned above. This is achieved by a capacitive stylus, a touch device and an associated electronic system according to claims 1, 15 and 18. The dependent claims pertain to corresponding further developments and improvements.

As will be seen more clearly from the detailed description following below, the capacitive stylus includes a non-conductive nib, a first electrode and a second electrode and a control circuit. The first electrode and a second electrode are respectively arranged at different longitudinal positions of the capacitive stylus. The control circuit is coupled to the first electrode and the second electrode, and is configured to control the first electrode to generate a first signal and control the second electrode to generate a second signal, for a touch device to determine the location of the non-conductive nib on the touch device according to the first signal and the second signal.

As will be seen more clearly from the detailed description following below, the touch device which is used with a capacitive stylus having a non-conductive nib and a first electrode and a second electrode arranged at different longitudinal positions of the capacitive stylus. The touch device comprises a receiving unit and a location determining unit. The receiving unit is used for receiving a first signal generated by the first electrode and a second signal generated by the second electrode. The location determining unit is coupled to the receiving unit, and is arranged for determining a location of the non-conductive nib on the touch device according to the first signal and the second signal.

As will be seen more clearly from the detailed description following below, the electronic system which comprises a capacitive stylus and a touch device. The capacitive stylus comprises: a non-conductive nib; a first electrode and a second electrode, respectively arranged at different longitudinal positions of the capacitive stylus; and a control circuit, coupled to the first electrode and the second electrode, the control circuit configured to control the first electrode to generate a first signal and control the second electrode to generate a second signal. The touch device is arranged for determining a location of the non-conductive nib on the touch device according to the first signal and the second signal.

In the following, the invention is further illustrated by way of example, taking reference to the accompanying drawings. Thereof:

### Brief Description of the Drawings

FIG. 1 is a diagram illustrating a capacitive stylus according to an embodiment of the present invention.
FIG. 2 is a diagram illustrating a first electrode and second electrode according to a first embodiment of the present invention.
FIG. 3 is a diagram illustrating a first electrode and second electrode according to a second embodiment of the present invention.
FIG. 4 is a diagram illustrating a first electrode and second electrode according to a third embodiment of the present invention.
FIG. 5 is a diagram illustrating a first electrode and second electrode according to a fifth embodiment of the present invention.
FIG. 6 is a diagram illustrating a touch device 610 which is used with a capacitive stylus according to an embodiment of the present invention.
FIG. 7 is a diagram illustrating an electronic system comprising a capacitive stylus and a touch device according to an embodiment of the present invention, wherein the touch device detects the location of a non-conductive nib.

### Detailed Description

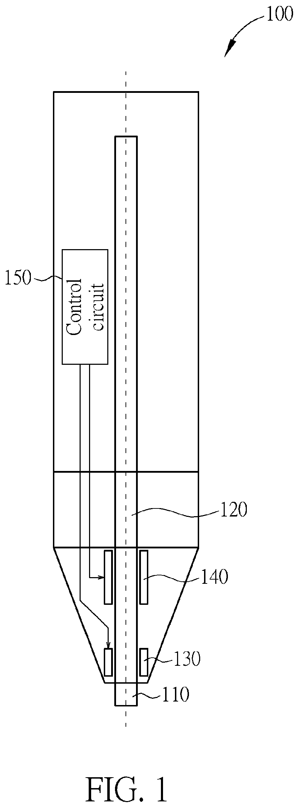

FIG. 1 is a diagram illustrating a capacitive stylus 100 according to an embodiment of the present invention. As shown in FIG. 1, the capacitive stylus 100 comprises a non-conductive nib 110, a non-conductive refill 120, a first electrode 130, a second electrode 140 and a control circuit 150. In this embodiment, the non-conductive nib 110 and the non-conductive refill 120 are in one-piece, that is, the non-conductive nib 110 may be the end part of the non-conductive refill 120, but the present invention is not limited thereto.

In this embodiment, the control circuit 150 is configured to control the first electrode 130 to generate a first signal, and control the control second electrode 140 to generate a second signal, for a touch device to determine the location of the non-conductive nib 110 on the touch device according to the first signal and second signal. In other words, the touch device calculates the location of the non-conductive nib 110 on the touch device by detecting signals generated from the first electrode 130 and the second electrode 140, rather than exerting voltage on the non-conductive nib 110 for the touch device to detect the location of the non-conductive nib 110 on the touch device. In an embodiment, the control circuit 150 may exert the same frequency and the same voltage (e.g. 200 KHz and 20 Volt) onto the first electrode 130 and the second electrode 140, or exert different voltages (e.g. 20 Volt and 40 Volt) or different frequency (e.g. 200 KHz and 250 KHz) on to the first electrode 130 and the second electrode 140.

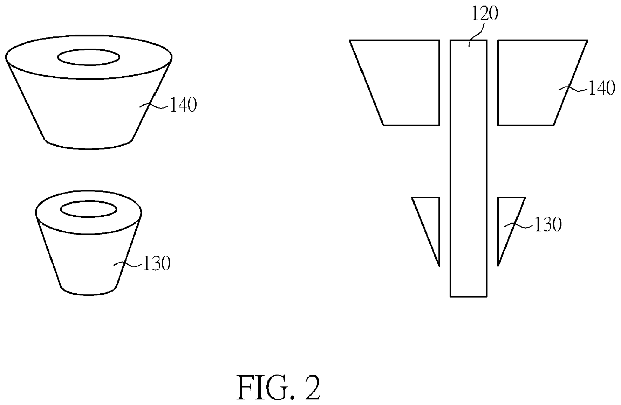

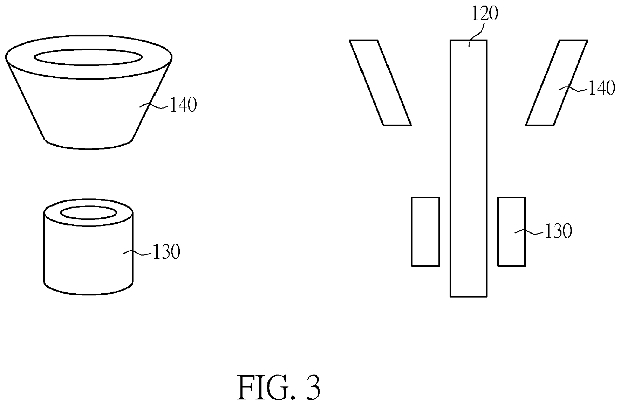

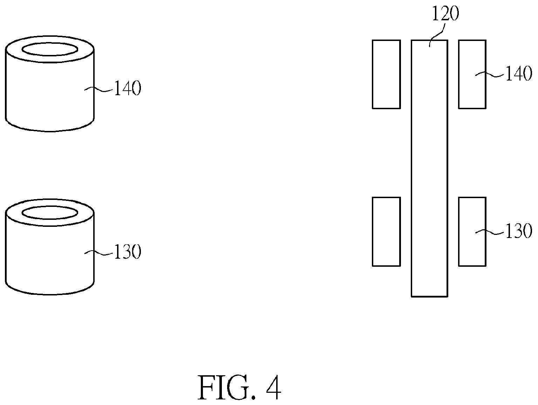

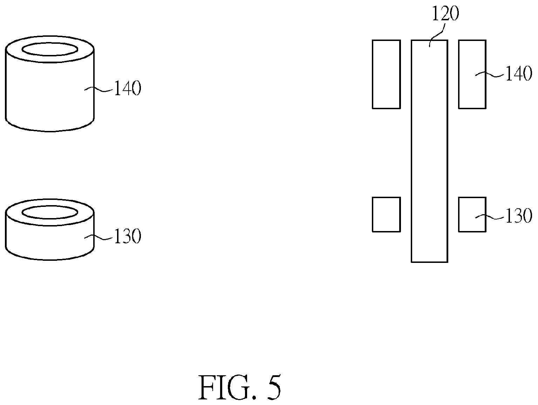

As shown in FIG. 1, the first electrode 130 and the second electrode 140 are arranged at different longitudinal positions of the capacitive stylus 100, and the first electrode 130 and the second electrode 140 may be designed in ring-shaped electrodes, columnar electrodes or any other shaped electrodes. FIGs. 2-5 illustrate the first electrode 130 and the second electrode 140 the embodiments of the present invention. As shown in the embodiment of FIG. 2, both the first electrode 130 and the second electrode 140 are cone-ring shaped electrodes, and the first electrode 130 and the second electrode 140 circulate the non-conductive refill 120. As shown in the embodiment of FIG. 3, the first electrode 130 is a cone-ring shaped electrode, and the second electrode 140 is columnar-ring shaped electrode, and the first electrode 130 and the second electrode 140 circulate the non-conductive refill 120. As shown in the embodiment of FIG. 4, both the first electrode 130 and the second electrode 140 are columnar-ring shaped electrode, and the first electrode 130 and the second electrode 140 circulate the non-conductive refill 120. In the embodiment of FIG. 4, considering the distance from the second electrode 140 to the non-conductive nib 110 is relatively far, the first electrode 130 is implemented in columnar-ring shaped electrode with a higher height, and second electrode 140 is implemented in a columnar-ring shaped electrode with lower height, and the first electrode 130 and the second electrode 140 circulate the non-conductive refill 120.

It should be noted that the fashions of the first electrode 130 and the second electrode 140 shown in FIGS. 2-5 are merely for illustrative purposes, and are not meant to be limitations to the present invention. In other embodiments, the first electrode 130 and the second electrode 140 may circulate the non-conductive refill 120 in an incomplete manner, or the first electrode 130 and the second electrode 140 may be solid electrodes. As long as the first electrode 130 and the second electrode 140 are positioned at different longitudinal locations of the capacitive stylus 100, the shape of electrodes can be modified according to actual design requirements, and these design modifications shall fall within the scope of the present invention.

The capacitive stylus 100 in this embodiment generates signal via the first electrode 130 and the second electrode 140 for the touch device to determine the location of the non-conductive nib 110 on the touch device, which greatly improves the design flexibility of the non-conductive nib 110 and/or the non-conductive refill 120, e.g. general writing tools may be used cooperatively to reach both the analog and digital output functions. For example, the non-conductive nib 110 and/or the non-conductive refill 120 may be pencil refill, roller pen refill, fluorescent refill, ball pen refill, plastic refill, whiteboard marker refill or any other writable refill. Take the whiteboard marker refill as an example of the non-conductive nib 110 and the non-conductive refill 120, the user may write on a touch-detective whiteboard, wherein the whiteboard marker refill may leave traces on the whiteboard for the user to watch, and the detection circuit inside the whiteboard may also detect the moving trajectories of the non-conductive nib 110 on the whiteboard, to generate digital files (e.g. texts and picture files of patterns). Further, take the pencil refill as an example of the non-conductive nib 110 and the non-conductive refill 120, the user may place a blank paper on a drawing board (or writing board) with touch detective functions, wherein the pencil refill may leave traces on the blank paper for the user to watch, and the detection circuit of the drawing board (or writing board) may also detect the trajectories of the non-conductive nib 110 on the blank paper to generate digital file (e.g. texts and photo files of patterns on the bank paper).

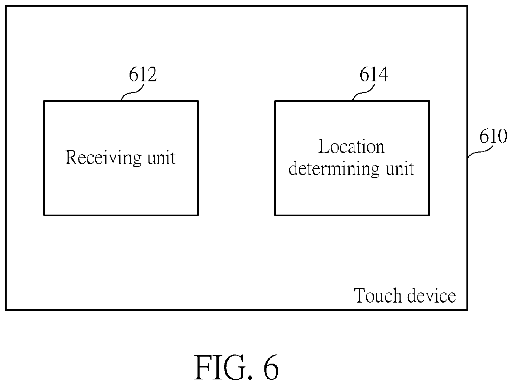

FIG. 6 is a diagram illustrating a touch device 610 which is used with a capacitive stylus having a non-conductive nib and a first electrode and a second electrode arranged at different longitudinal positions of the capacitive stylus (such as the aforementioned capacitive stylus 100) according to an embodiment of the present invention. The touch device 610 comprises a receiving unit 612 and a location determining unit 614. The receiving unit 612 is used for receiving a first signal generated by the first electrode and a second signal generated by the second electrode. The location determining unit 614 is coupled to the receiving unit, and is arranged for determining a location of the non-conductive nib on the touch device according to the first signal and the second signal.

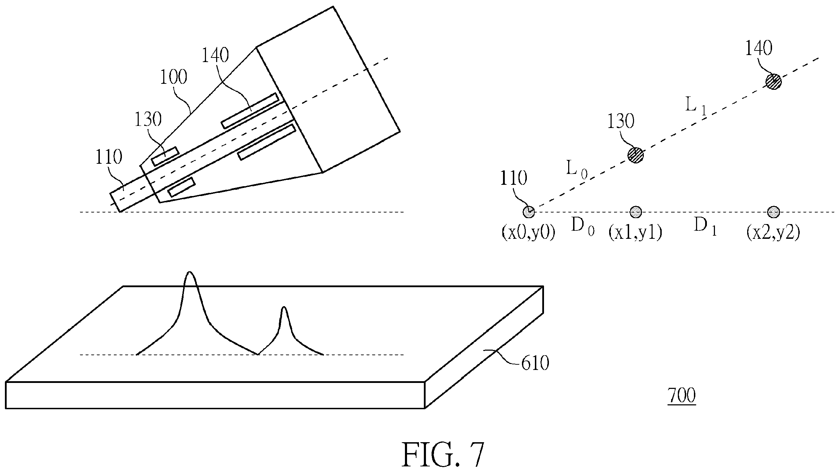

FIG. 7 is a diagram illustrating an electronic system 700 comprising a capacitive stylus (e.g. the capacitive stylus 100 mentioned in FIG. 1) and a touch device (e.g. the touch device 610 mentioned in FIG. 6) according to an embodiment of the present invention, wherein the touch device 610 is used to detect the location of a non-conductive nib 110.. As shown in FIG. 7, the touch device 610 may detect the first signal from the first electrode 130 and the second signal from the second electrode 140, and determine the projection coordinates (x1, y1) and (x2, y2) of the first electrode 130 and the second electrode 140 on the touch device 610 respectively. Next, since the distance L0 between the non-conductive nib 110 and the first electrode 130 and the distance L1 between the first electrode 130 and the second electrode 140 are known, the calculation circuit inside the touch device 610 may use vector or trigonometric calculation methods to calculate the location (x0, y0) of the non-conductive nib 110 on the touch device 610 according to the distance D1 between the projection coordinates (x1, y1) and (x2, y2), the distance L0 between the non-conductive nib 110 and the first electrode 130, and the distance L1 between the first electrode 130 and second electrode 140.

In some embodiments, the touch device 610 may be a touch pad, touch screen, touch display, notebook, tablet, digital drawing board, digital writing board or any other electronic device capable of showing and recording the trajectories of the capacitive stylus 100 on the touch device 610.

In the above embodiments, the capacitive stylus 100 contains the non-conductive refill 120 circulated by the first electrode 130 and the second electrode 140, but the non-conductive refill 120 is an optional element which may be removed from the capacitive stylus 100 without affecting the overall operation of the capacitive stylus 100. By removing the non-conductive refill 120, the capacitive stylus 100 may has a smaller diameter so that the capacitive stylus 100 can be inserted into the touch device 610.

To summarize the present invention, the capacitive stylus of the present invention is designed with two electrodes in order to generate signals for the touch device to perform trajectory detections. Hence, the refill of the capacitive stylus may be implemented in different refills to provide both the analog and digital output functions. For example, some conventions combinations, such as whiteboard pen and whiteboard, chalk and blackboard, crayon and drawing paper, pen and paper, pencil and sketchbook, may easily reach both analog and digital functions with the design of the capacitive stylus and touch device in embodiments of the present invention. On the other hand, since the material of the refills is not limited, the capacitive stylus may be implemented with a smaller refill to further reduce the diameter of the capacitive stylus.

## Claims

1. A capacitive stylus (100), **characterized by**:
a non-conductive nib (110);
a first electrode (130) and a second electrode (140), respectively arranged at different longitudinal positions of the capacitive stylus (100); and
a control circuit (150), coupled to the first electrode (130) and the second electrode (140), the control circuit (150) configured to control the first electrode (130) to generate a first signal and control the second electrode (140) to generate a second signal, for a touch device (610) to determine a location of the non-conductive nib (110) on the touch device (610) according to the first signal and the second signal.

2. The capacitive stylus (100) of claim 1, **characterized in that** the first electrode (130) is a columnar electrode, and the second electrode (140) is a ring-shaped electrode.

3. The capacitive stylus (100) of claim 1, **characterized in that** the first electrode (130) is a columnar electrode, and the second electrode (140) is a columnar electrode.

4. The capacitive stylus (100) of claim 1, **characterized in that** the first electrode (130) is a ring-shaped electrode, and the second electrode (140) is a columnar electrode.

5. The capacitive stylus (100) of claim 1, **characterized in that** the first electrode (130) is a ring-shaped electrode, and the second electrode (140) is a ring-shaped electrode.

6. The capacitive stylus (100) of claim 5, further **characterized by**:
a non-conductive refill (120);
wherein both the first electrode (130) and the second electrode (140) encircle the non-conductive refill (120).

7. The capacitive stylus (100) of claim 6, **characterized in that** the first electrode (130) is a cone-ring shaped electrode, and the second electrode (140) is a cone-ring shaped electrode.

8. The capacitive stylus (100) of claim 6, **characterized in that** the first electrode (130) is a cone-ring shaped electrode, and the second electrode (140) is a columnar-ring shaped electrode.

9. The capacitive stylus (100) of claim 6, **characterized in that** the first electrode (130) is a columnar-ring shaped electrode, and the second electrode (140) is a cone-ring shaped electrode.

10. The capacitive stylus (100) of claim 6, **characterized in that** the first electrode (130) is a columnar-ring shaped electrode, and the second electrode (140) is a columnar-ring shaped electrode.

11. The capacitive stylus (100) of claim 6, **characterized in that** the non-conductive nib (110) and the non-conductive refill (120) are in one-piece.

12. The capacitive stylus (100) of claim 1, **characterized in that** the first signal and the second signal have the same frequency and voltage.

13. The capacitive stylus (100) of claim 1, further **characterized by**:
a non-conductive refill (120), wherein the non-conductive refill (120) is a pencil refill, roller pen refill, fluorescent refill, ball pen refill, plastic refill or whiteboard marker refill.

14. The capacitive stylus (100) of claim 13, **characterized in that** both the first electrode (130) and the second electrode (140) are ring-shaped electrodes, and encircle the non-conductive refill.

15. A touch device (610), used with a capacitive stylus (100) having a non-conductive nib (110) and a first electrode (130) and a second electrode (140) arranged at different longitudinal positions of the capacitive stylus (100), the touch device (610) **characterized by**:
a receiving unit (612), for receiving a first signal generated by the first electrode (130) and a second signal generated by the second electrode (140); and
a location determining unit (614), coupled to the receiving unit (612), for determining a location of the non-conductive nib (110) on the touch device (610) according to the first signal and the second signal.

16. The touch device (610) of claim 15, further **characterized by**:
a calculation circuit, for using a vector or trigonometric calculation method to calculate the location of the non-conductive nib (110) on the touch device (610) according to the distance between projection coordinates.
